# EUROPEAN PATENT APPLICATION

(11) **EP 4 446 286 A1**
(43) Date of publication of application: **16.10.2024**
(21) Application number: 22904182.7
(22) Date of filing: 05.12.2022
(51) Int. Cl.: C02F 1/68, A23L 2/00, A23L 2/38, B65D 51/28

(54) **SYSTEM FOR PROVIDING MINERAL-CONTAINING DRINKING WATER**

(30) Priority: 10.12.2021 JP 2021200741
(71) Applicant: Suntory Holdings Limited, Osaka 530-8203 (JP)
(72) Inventor: TAKAHASHI, Daiki, Tokyo 108-8503 (JP); MAKINO, Takashi, Tokyo 108-8503 (JP)
(74) Representative: Vossius & Partner Patentanwälte Rechtsanwälte mbB
(86) International application number: PCT/JP2022/044682
(87) International publication number: WO 2023/106253

(57) **Abstract**

Provided is a system for providing mineral-containing drinking water that makes it possible to easily obtain mineral-containing drinking water at home. According to the present invention, a system for providing mineral-containing drinking water comprises: a first container that contains a pressurized gas and a 1-10 mL single-use quantity of a concentrated mineral liquid composition that is to be used at a dilution rate of 100-1000 times; and a second container that holds 1-3 L of water. The first container can be attached as a lid part of the second container. When the first container has been attached as a lid part of the second container, the concentrated mineral liquid composition in the first container can be sprayed into the second container.

## Description

### TECHNICAL FIELD

The present invention relates to a system for providing mineral-containing drinking water.

### BACKGROUND ART

People are increasingly and socially interested in safe delicious water in recent years due to being health-conscious and desiring delicious foods. A large amount of mineral water in containers such as plastic bottles has therefore been drunk all over the world. Waste plastic containers such as plastic bottles are however a serious environmental problem. The development of mineral-containing water that can be easily provided at home or the like instead of packaged mineral water has been desired.

For example, PTL 1 discloses a method for producing mineral-containing water, wherein natural ore such as granite porphyry, tenjuseki, or tourmaline is immersed in water to elute mineral components. This method is however disadvantageous in that the efficiency in extracting minerals is not high. PTL 2 discloses a method for producing mineral water by heat-extracting chicken manure charcoal in warm water at 90 to 110°C for 0.5 to 2 hours. However, chicken manure charcoal is not suitable as a raw material for food, and effort is required for heat-extraction. It is difficult to say that mineral-containing water can be easily obtained at home or the like thereby.

PTL 3 discloses a method for producing mineral water by boiling extraction from bamboo charcoal. PTL 4 discloses a method for producing alkaline water by boiling-extracting charcoal such as wood charcoal. However, similarly to PTLs 1 and 2, these methods did not extract minerals at high efficiency, and effort is required for extracting minerals thereby.

### CITATION LIST

### PATENT LITERATURE

| | |
|---|---|
| PTL 1: | JP 2009-72723 A |
| PTL 2: | JP H06-31284 A |
| PTL 3: | JP 2005-334862 A |
| PTL 4: | JP 2001-259659 A |

### SUMMARY OF INVENTION

### TECHNICAL PROBLEM

The present invention is to provide a system for providing mineral-containing drinking water that makes it possible to obtain mineral-containing drinking water easily at home or the like.

### SOLUTION TO PROBLEM

The present inventors have noticed and examined that mineral-containing drinking water is produced by using a single-use disposable liquid composition in which mineral components are concentrated, and water in an amount for achieving a predetermined dilution rate. The present inventors have conceived an idea of encapsulating the liquid composition in which mineral components are concentrated (mineral-concentrated liquid composition) with pressurized gas in a small container that can be attached as a lid for a container and using this in combination with a container that can store water in an amount for achieving a predetermined dilution rate and completed the present invention. In the system of the present invention, the lid is attached to the water-storing container, and the mineral-concentrated liquid composition in the small container that is the lid can be spouted into the water in the container to produce mineral-containing drinking water easily even at home or the like. That is, the gist of the present invention is the following.
[1] A system for providing mineral-containing drinking water, including:
   a first container storing
      1 to 10 mL of a single-use mineral-concentrated liquid composition to be used at a dilution rate of 100 to 1000 times and
      pressurized gas,
   and configured to be attachable as a lid for a second container; and
   the second container for storing 1 to 3 L of water,
   wherein the first container and the second container are configured to enable the mineral-concentrated liquid composition in the first container to be spouted into the second container after attachment of the first container as the lid for the second container.
[2] The system according to [1], wherein
   the second container stores water in an amount necessary for achieving the dilution rate of the mineral-concentrated liquid composition, and
   the first container and the second container are configured to spout the mineral-concentrated liquid composition in the first container into the second container after the attachment of the first container as the lid for the second container to form mineral-containing drinking water in the second container.
[3] The system according to [1] or [2], wherein the first container and the second container are containers made of resin.
[4] The system according to any one of [1] to [3], wherein the second container is a reusable container.
[5] The system according to any one of [1] to [4], wherein the second container is made of resin, and has a mass of 85 g or more.
[6] The system according to any one of [1] to [5], wherein the mineral-concentrated liquid composition contains concentrated extract liquid from plant-derived activated carbon.
[7] The system according to any one of [1] to [6], wherein the mineral-concentrated liquid composition contains concentrated extract liquid from palm shell activated carbon.
[8] A method for preparing mineral-containing drinking water in a second container using a mineral-concentrated liquid composition stored in a first container, wherein
   the first container stores 1 to 10 mL of the single-use mineral-concentrated liquid composition to be used at a dilution rate of 10 to 1000 times and pressurized gas, is configured to be attachable as a lid for the second container, and to enable the mineral-concentrated liquid composition in the first container to be spouted into the second container after attachment of the first container as the lid for the second container, and
   the second container has a capacity of 1 to 3 L, and can store water in a volume ranging from 1 to 3 L and obtained by multiplying volume of the mineral-concentrated liquid composition by the dilution rate, the method including:
      filling the second container with water in an amount necessary for achieving the dilution rate of the mineral-concentrated liquid composition; and
      spouting the mineral-concentrated liquid composition in the first container into the second container filled with the water after attachment of the first container as the lid for the second container.
[9] The method according to [8], wherein the mineral-concentrated liquid composition contains concentrated extract liquid from palm shell activated carbon.
[10] The method according to [8] or [9], further including washing the second container after consumption of the mineral-containing drinking water in the second container and then refilling the second container with water to use the second container.
[11] The method according to any one of [8] to [10], further including collecting the first container for reuse after the mineral-concentrated liquid composition is spouted.

### ADVANTAGEOUS EFFECTS OF INVENTION

As compared with the conventional methods involving extracting mineral components from natural ore or charcoal, the system of the present invention makes it possible to reduce effort required for extraction to produce mineral-containing drinking water easily even at home or the like. In the conventional methods, it was difficult to produce mineral-containing water with stable quality due to variation in ingredients or conditions during the extraction. Meanwhile, in the system of the present invention, a single-use mineral-concentrated liquid composition provided beforehand is spouted by pressurized gas into water for achieving a predetermined dilution rate, and accordingly, it is possible to provide mineral-containing drinking water with stable quality.

In the case where mineral-containing water is produced in a relatively large amount of 1 to 3 L at home or the like, conventional extraction methods required a large-capacity container for extraction, and also required time. The system of the present invention however makes it possible to produce mineral-containing drinking water in a volume of 1 to 3 L by convenient means such as spouting a mineral-concentrated liquid composition from a lid.

In the system of the present invention, in the case where a second container for storing water is a reusable container, and water such as tap water simply obtained even at home is used as the water to be stored in the second container, it is possible to easily produce mineral-containing drinking water in a volume of 1 to 3 L by preparing only a first container storing mineral-concentrated liquid composition at home. Accordingly, the system of the present invention can substitute for the purchase of plastic bottles of mineral water having a capacity of 1 to 3 L, and can contribute to a reduction in waste plastic bottles. Since the first container for storing mineral-concentrated liquid composition is smaller than a container having a capacity of 1 to 3 L, the first container can be more space-saving while the first container is carried or stored in the case of purchasing only the first container newly than in the case of purchasing mineral water in plastic bottles having capacities of 1 to 3 L. The discard of only the first container reduces plastic waste as compared with discarding plastic bottles having a capacity of 1 to 3 L every time. The collection and reuse of the first container further reduces waste.

The system of the present invention is generally advantageous in saving space as compared with water servers using bottles of water having capacities of around 5 to 15 L.

In the system of the present invention, the operation of spouting the contents in the first container is performed after the attachment of the first container as a lid for the second container during the production of the mineral-containing drinking water. Refreshingness and pleasure during the spout can therefore also be obtained.

The use of concentrate of extract liquid from specific activated carbon as the mineral-concentrated liquid composition in the system of the present invention makes it possible to produce smooth and mild mineral-containing drinking water. Since it is possible to reduce a chlorine smell or the smell like chlorine derived from tap water even when using tap water as water for dilution, delicious mineral-containing water can be produced easily at home.

### DESCRIPTION OF EMBODIMENTS

The present invention relates to a system for providing mineral-containing drinking water, and the system specifically includes: (1) a first container storing 1 to 10 mL of a single-use mineral-concentrated liquid composition to be used at a dilution rate of 100 to 1000 times and pressurized gas, and being attachable as a lid for a second container; and (2) the second container for storing 1 to 3 L of water, wherein the first container and the second container are configured to enable the mineral-concentrated liquid composition in the first container to be spouted into the second container after attachment of the first container as the lid for the second container.

### <Mineral-containing drinking water>

The mineral-containing drinking water to be provided by the system of the present invention means drinking water substituting for packaged drinking water such as so-called mineral water or bottled water, and drinking water that contains minerals. The liquid color thereof is commonly colorless and transparent in the same way as so-called water.

The mineral-containing drinking water provided by the present invention is usually tasteless and smell-less liquid in the same as so-called water. The mineral-containing drinking water may however feel slightly flavored or smooth due to the mineral.

Although the mineral-containing drinking water to be provided by the present invention is usually intended to be tasteless and smell-less liquid in the same way as water, the mineral-containing drinking water to be provided by the present invention may be drinking liquid such as flavored water containing fruit extract or vegetables extract, herb, spice, flavor, or the like in a small amount. Those flavoring ingredients can be mixed into the mineral-concentrated liquid composition to be stored in the first container in small amounts to produce such a liquid. Since the mineral-concentrated liquid composition is 100 to 1000 times diluted in the system of the present invention, it is however generally difficult to give a flavor to the finally obtained entire drinking water by mixing such a flavoring ingredient into the mineral-concentrated liquid composition. Accordingly, the mineral-containing drinking water provided by the present invention is more preferably tasteless and smell-less drinking water in the same way as ordinary mineral-containing water than is specifically flavored water (although the mineral-containing drinking water is preferably tasteless, the mineral-containing drinking water may feel slightly flavored or smooth in the same way as common mineral water.).

The mineral-containing drinking water of the present invention is basically intended for drinking and, for example, intended as water to be drunk as it is, water for preparing beverages such as tea and coffee, or water for diluting concentrated alcohol such as whiskey. Purposes for which ordinary mineral water is used except drinking are not, however, limited. Examples include, but not limited to, the use of the mineral-containing drinking water for making miso soup or boiled foods or for cooking such as cooking rice instead of water. The mineral-containing drinking water can also be frozen into ice, and the ice can be used for various foods and drinks. The mineral-containing drinking water can also be used as water to be given to plants to supply minerals to the plants.

### <Mineral-concentrated liquid composition>

The mineral-concentrated liquid composition to be stored in the first container in the system of the present invention means a liquid composition containing minerals, wherein the composition can be 100 to 1000 times diluted with water to form the mineral-containing drinking water.

The mineral-concentrated liquid composition preferably contains concentrate of extract liquid from activated carbon derived from a plant material. The use of concentrated extract liquid from activated carbon derived from a plant material, especially concentrated extract liquid from palm shell activated carbon, as mineral sources in the mineral-concentrated liquid composition makes it possible to produce smooth and satisfactory mineral-containing drinking water with little odd taste.

Activated carbon is a porous substance containing oxygen, hydrogen, calcium, and the like besides carbon that constitutes most of the activated carbon. Since activated carbon has a large surface area per volume, and has the property of adsorbing many substances, activated carbon has therefore been widely produced industrially since the early 20th century. Activated carbon is commonly produced by generating micropores in the nanometer order (activation) in carbon materials as the raw materials. Methods for producing activated carbon are roughly classified into gas activation, involving carbonizing raw material and subjecting the carbonized raw material to activation treatment with activating gas such as steam or carbon dioxide at high temperature, and chemical activation, involving adding chemicals such as zinc chloride or phosphoric acid to raw material and then heating the raw material to simultaneously carbonize and activate the raw material in an inert gas atmosphere. In the present invention, the activated carbon may be activated carbon produced in either method. The raw material of the activated carbon only has to be plant-derived raw material, and examples thereof include fruit shells (coconut palms, oil palms, almonds, walnuts, and plums), wood (sawdust, wood charcoal, resin, and lignin), bamboo, food residues (bagasse, chaff, coffee beans, and blackstrap molasses), and waste (waste fluid from pulp factories and construction waste material). The raw material is typically selected from palm shell, sawdust, bamboo, and a combination thereof, and is preferably palm shell. The palm shell means portions that are present in fruits of coconut palms or oil palms and referred to as shell. Examples of the shape of the activated carbon to be used in the production of the extract liquid include, but not particularly limited to, powdered activated carbon, granular activated carbon (crushed charcoal, granular charcoal, and molded charcoal), fibrous activated carbon, and specially molded activated carbon.

A step of extracting minerals from the activated carbon derived from plant material with an aqueous solvent is achieved by contacting the plant-derived activated carbon with the aqueous solvent to elute minerals present in the plant-derived activated carbon. The step can be performed by for example, immersing the plant-derived activated carbon in the aqueous solvent, or passing the aqueous solvent through a column filled with the activated carbon. If the plant-derived activated carbon is immersed in the aqueous solvent, the aqueous solvent may be stirred to increase the extraction efficiency. The method for producing mineral extract liquid may further include a step of centrifuging the obtained extract liquid and/or a step of filtering the obtained extract liquid for removing impurities after the extraction of minerals from the plant-derived activated carbon with the aqueous solvent.

The aqueous solvent to be used in the step of extracting minerals from the plant-derived activated carbon with the aqueous solvent refers to an aqueous solvent other than a HCl solution basically, and is typically a water solvent and particularly preferably pure water. The pure water means highly pure water not or scarcely containing impurities such as salts, residual chlorine, insoluble particulates, organic matter, and non-electrolyzable gas. Pure water includes RO water (water passed through a reverse osmotic membrane), deionized water (water from which ions are removed by ion-exchange resin or the like), and distilled water (water distilled with a distiller) by the method for removing impurities. Since pure water does not contain minerals, pure water does not exhibit the effect of supplying minerals.

The extraction temperature when minerals are extracted from the plant-derived activated carbon with the aqueous solvent is not particularly limited, and can be adjusted to a temperature of, for example, 5°C or more, 10°C or more, 15°C or more, 20°C or more, 25°C or more, 30°C or more, 35°C or more, 40°C or more, 45°C or more, 50°C or more, 55°C or more, 60°C or more, 65°C or more, 70°C or more, 75°C or more, 80°C or more, 85°C or more, or 90°C or more, and 95°C or less.

The extraction time when minerals are extracted from the plant-derived activated carbon with the aqueous solvent is not particularly limited, and can be adjusted to, for example, 5 minutes or more, 10 minutes or more, 15 minutes or more, 20 minutes or more, 25 minutes or more, 30 minutes or more, 35 minutes or more, 40 minutes or more, 45 minutes or more, 50 minutes or more, 55 minutes or more, 60 minutes or more, 65 minutes or more, 70 minutes or more, or 75 minutes or more, and 80 minutes or less.

The thus obtained concentrate of the mineral extract liquid can be used for the mineral-concentrated liquid composition.

The step of concentrating a mineral extract liquid can be performed by a method well-known in the art, and examples thereof include boiling concentration, vacuum concentration, freeze concentration, membrane concentration, and ultrasonic atomization separation. The mineral extract liquid is concentrated to obtain concentrate of mineral extract liquid containing desired minerals such as potassium at high concentration with little change in the composition thereof.

The obtained concentrate is preferably subjected to refrigeration storage and cold filtration after the step of concentrating the mineral extract liquid. The cooling temperature is adjusted to typically 0 to 15°C, and preferably 3 to 10°C, 3 to 9°C, 3 to 8°C, 3 to 7°C, or 3 to 6°C. The pH of the mineral-concentrated fluid composition is preferably adjusted before such refrigeration storage and cold filtration. The pH of the mineral-concentrated fluid composition is adjusted to 7.5 or more, 8.0 or more, 8.5 or more, 9.0 or more, 9.5 or more, or 10.0 or more, and 10.5 or less. Floatage and precipitate in the concentrate can be reduced by such treatment.

In the mineral-concentrated liquid composition for the present invention, the rate of potassium ions is preferably high among the rates of the metal ions in the mineral-concentrated fluid composition.

Potassium is one of the minerals necessary for the living body, is mostly present in cells, and plays an important role for maintaining the osmotic pressure of cells or retaining moisture in cells while interacting with sodium that is present in extracellular fluid in a large amount. Potassium and sodium have the functions of maintaining the acid-base equilibrium, transmitting nerve stimuli, regulating cardiac function and muscular function, and regulating enzyme reactions in cells besides maintaining the osmotic pressure of cells. It is known that since potassium suppresses sodium reabsorption in the kidney and promotes the excretion thereof in urine, potassium has the effect of reducing the blood pressure. While potassium is thus a mineral component that is very important for humans, excessive potassium ions may bring odd tastes such as bitterness and harshness. The mineral-concentrated liquid composition of the present invention is therefore preferably prepared so that the lower limit of the potassium concentration of the composition diluted at a predetermined dilution rate (potassium concentration in mineral-concentrated liquid composition (ppm)/dilution rate) is 20 ppm or more, 25 ppm or more, 30 ppm or more, 35 ppm or more, 45 ppm or more, or 50 ppm or more, and the upper limit thereof is 600 ppm or less, 595 ppm or less, 590 ppm or less, 585 ppm or less, 580 ppm or less, 575 ppm or less, 570 ppm or less, 565 ppm or less, 560 ppm or less, 555 ppm or less, 550 ppm or less, 545 ppm or less, 540 ppm or less, 535 ppm or less, 530 ppm or less, 525 ppm or less, 520 ppm or less, 515 ppm or less, 510 ppm or less, 505 ppm or less, 500 ppm or less, 495 ppm or less, 490 ppm or less, 485 ppm or less, 480 ppm or less, 475 ppm or less, 470 ppm or less, 465 ppm or less, 460 ppm or less, 455 ppm or less, 450 ppm or less, 445 ppm or less, 440 ppm or less, 435 ppm or less, 430 ppm or less, 425 ppm or less, 420 ppm or less, 415 ppm or less, 410 ppm or less, 405 ppm or less, 400 ppm or less, 395 ppm or less, 390 ppm or less, 385 ppm or less, 380 ppm or less, 375 ppm or less, 370 ppm or less, 365 ppm or less, 360 ppm or less, 355 ppm or less, 350 ppm or less, 345 ppm or less, 340 ppm or less, 335 ppm or less, 330 ppm or less, 325 ppm or less, 320 ppm or less, 315 ppm or less, 310 ppm or less, 305 ppm or less, 300 ppm or less, 295 ppm or less, 290 ppm or less, 285 ppm or less, 280 ppm or less, 275 ppm or less, 270 ppm or less, 265 ppm or less, 260 ppm or less, 255 ppm or less, 250 ppm or less, 245 ppm or less, 240 ppm or less, 235 ppm or less, 230 ppm or less, 225 ppm or less, 220 ppm or less, 215 ppm or less, 210 ppm or less, 205 ppm or less, or 200 ppm or less.

Naturally occurring water contains chloride ions in a certain amount, and many of these are derived from the geology and seawater. If chloride ions are present at 250 to 400 mg/l or more, the chloride ions may make persons sensitive to taste feel saltiness to deteriorate the taste. The content of chloride ions in the mineral-concentrated liquid composition of the present invention is preferably as low as possible. The mineral-concentrated liquid composition of the present invention is preferably prepared so that the chloride ion content thereof is 50% or less of the potassium ion content, 49% or less, 48% or less, 47% or less, 46% or less, 45% or less, 44% or less, 43% or less, 42% or less, 41% or less, 40% or less, 39% or less, 38% or less, 37% or less, 36% or less, 35% or less, 34% or less, 33% or less, 32% or less, 31% or less, 30% or less, 29% or less, 28% or less, 27% or less, 26% or less, 25% or less, 24% or less, 23% or less, 22% or less, 21% or less, 20% or less, 19% or less, 18% or less, 17% or less, 16% or less, 15% or less, 14% or less, 13% or less, 12% or less, 11% or less, 10% or less, 9% or less, 8% or less, 7% or less, 6% or less, 5% or less, 4% or less, 3% or less, 2% or less, or 1% or less of the potassium ion content.

It is known that calcium in combination with phosphorous forms a skeletal structure as hydroxyapatite, and calcium participates in the contraction of muscles in the living body. It is known that magnesium participates in bone or tooth formation, and participates in many enzyme reactions in the body and energy generation. It is known that the contents of calcium ions and magnesium ions in water influence the taste of the water. Water in which the index of the total content of calcium and magnesium among minerals contained in the water (hardness) is lower than a certain level is referred to as soft water. Water in which the index (hardness) is higher than the certain level is referred to as hard water. In general, many of the mineral waters produced in Japan are soft water, and many of the mineral waters produced in Europe are hard water. The criteria of WHO prescribes that water in which the American hardness (mg/l), obtained by converting the amounts of these salts into the amount of calcium carbonate, is 0 to 60 is referred to as soft water, water in which the American hardness is 120 to 180 is referred to as hard water, and water in which the American hardness is 180 or more is referred to as very hard water. Water having moderate hardness (10 to 100 mg/l) is commonly supposed to be delicious. If especially the magnesium content increases, it is difficult to drink water due to strong bitterness. If the hardness is too high, water does not only influence the palate for water, but also irritates the stomach and the intestines to lead to diarrhea or the like, and the water having too high hardness is not therefore preferable. In the mineral-concentrated liquid composition for the present invention, the content of calcium ions is preferably 2.0% or less of the content of potassium ions, more preferably 1.9% or less, 1.8% or less, 1.7% or less, 1.6% or less, 1.5% or less, 1.4% or less, 1.3% or less, 1.2% or less, 1.1% or less, 1.0% or less, 0.9% or less, 0.8% or less, 0.7% or less, 0.6% or less, 0.5% or less, 0.4% or less, 0.3% or less, 0.2% or less, 0.1% or less, 0.09% or less, 0.08% or less, 0.07% or less, 0.06% or less, 0.05% or less, 0.04% or less, 0.03% or less, 0.02% or less, or 0.01% or less of the content of potassium ions. The content of magnesium ions in the mineral-concentrated fluid composition for the present invention is preferably 1.0% or less of the content of potassium ions, more preferably 0.9% or less, 0.8% or less, 0.7% or less, 0.6% or less, 0.5% or less, 0.4% or less, 0.3% or less, 0.2% or less, 0.1% or less, 0.09% or less, 0.08% or less, 0.07% or less, 0.06% or less, 0.05% or less, 0.04% or less, 0.03% or less, 0.02% or less, or 0.01% or less of the content of potassium ions.

Sodium maintains the amount of extracellular fluid and the amount of blood circulated while retaining moisture, and regulates the blood pressure in the living body. It is known that the ingestion of a certain amount of sodium ions is good for effective hydration in the body, and is effective especially against heatstroke. The excessive ingestion of sodium may however increase the blood pressure or lead to dropsy due to a rise in the amounts of these liquids. As the content of sodium ions increases, water may taste saltier and feel slimier to be deteriorated in the feeling of refreshment when drinking. Accordingly, the content of sodium ions in the mineral-concentrated liquid composition for the present invention is preferably 5 to 45% of the content of potassium ions, more preferably 5 to 40%, 5 to 35%, 5 to 30%, 5 to 25%, 5 to 20%, 5 to 15%, or 10 to 15% of the content of potassium ions.

The contents of potassium ions, sodium ions, magnesium ions, and calcium ions can be measured, for example, by an ICP emission spectrophotometer. The content of chloride ions can be measured, for example, in the method described in Examples and using an ion chromatography system.

When the mineral-concentrated liquid composition for the present invention is diluted with water at a predetermined dilution rate, the composition may produce weakly alkaline water. For example, the pH of such weakly alkaline water may be in the range of 7.5 to 10.5, 8.0 to 10.5, 8.0 to 10.0, 8.5 to 10.0, 8.5 to 9.5, or 9.0 to 9.5. Even if tap water is used as the water to be stored in the second container, the chlorine smell or the smell like chlorine derived from the tap water in the finally obtained mineral-containing drinking water can be reduced by using the concentrated extract liquid from the plant-derived activated carbon, especially the concentrated extract liquid from the activated carbon derived from palm shell to produce weakly alkaline water.

The mineral-concentrated liquid composition may contain finely pulverized material of the plant-derived activated carbon and L-ascorbic acid besides the above-described concentrated extract liquid from the plant-derived activated carbon. Since the mineral-concentrated liquid composition has such a composition, even if tap water is used as the water to be stored in the second container, it is possible to further reduce the chlorine smell or the smell like chlorine derived from tap water when the mineral-concentrated liquid composition is mixed with tap water in the second container to prepare the mineral-containing drinking water.

The finely pulverized material of the plant-derived activated carbon is powder containing the above-described plant-derived activated carbon that is finely pulverized. The finely pulverized material needs to have so small a particle size as not to occlude the spouting mechanism of the first container described below. For example, the particle size is preferably around 1 to 10 µm and further preferably around 2 to 8 µm. Examples of the type of the plant to be used as the raw material of the activated carbon include the same as those of the plant-derived activated carbon for mineral-concentrated liquid composition. The plant is typically selected from palm shell, sawdust, bamboo, or a combination thereof, and is preferably bamboo.

If the finely pulverized material of the plant-derived activated carbon is mixed in the mineral-concentrated liquid composition, the amount is preferably around 1 to 10 mg/L, further preferably at 2 to 6 mg/L, and further preferably at 2 to 4 mg/L based on the amount of the mineral-containing drinking water obtained after the mineral-concentrated liquid composition is diluted at the predetermined dilution rate. If the finely pulverized material of the activated carbon is added in an amount of more than 4 mg/L, the liquid color of the finally obtained mineral-containing drinking water may be slightly blackish.

If L-ascorbic acid is mixed in the mineral-concentrated liquid composition, the amount is preferably at around 1 to 100 mg/L, further preferably at 10 to 80 mg/L, and further preferably at 20 to 60 mg/L based on the amount of the mineral-containing drinking water obtained after the mineral-concentrated liquid composition is diluted at the predetermined dilution rate. If L-ascorbic acid is added in an amount of more than 60 mg/L, the finally obtained mineral-containing drinking water may be slightly salty according to the added amount.

For example, if the mineral-concentrated liquid composition contains the concentrated extract liquid from the plant-derived activated carbon, the finely pulverized material of the plant-derived activated carbon, and L-ascorbic acid, and if the second container is filled with tap water, the finally obtained mineral-containing drinking water contains tap water, the concentrated extract liquid from the plant-derived activated carbon, the finely pulverized material of the plant-derived activated carbon, and L-ascorbic acid.

### <First container>

The first container for the system for providing a beverage of the present invention stores 1 to 10 mL of the single-use mineral-concentrated liquid composition to be used at a dilution rate of 100 to 1000 times and pressurized gas. The first container is configured to be attachable as the lid for the below-described second container and designed to spout the mineral-concentrated liquid composition in the first container into the second container after the first container is attached to the second container as the lid of the second container.

The amount of the mineral-concentrated liquid composition stored is 1 to 10 mL, more preferably 1 to 5 mL, and further preferably 1 to 3 mL. This stored amount is a single-use amount at the time of producing the mineral-containing drinking water. The "single-use amount" means that the whole amount of the mineral-concentrated liquid composition in the first container is basically intended to be mixed into the water in the second container after the first container is attached as the lid for the second container. The case where a very minute amount of the composition remains in the first container inevitably is not excluded.

Although the amount of mineral-concentrated liquid composition stored in the first container (1 to 10 mL) is very small as compared with the amount of the water intended to be stored in the second container (1 to 3 L), in the present invention, pressurized gas stored with the mineral-concentrated liquid composition in the first container makes it possible to spout the composition in the first container into the second container, and a small volume of the mineral-concentrated liquid composition can therefore be mixed into a larger volume of water rapidly and diffused into the entire water.

The pressurized gas in the first container is stored for spouting the mineral-concentrated liquid composition from the first container, and only has to be possible to maintain the first container at positive pressure when the first container is sealed, and the type thereof is not particularly limited. For example, nitrogen gas or the like can be used. The pressure of the gas in the container is not particularly limited, either, and only has to be pressure that can be stored in the first container, and be possible to spout the mineral-concentrated liquid composition.

The first container is preferably a container made of resin from the viewpoint of light weight and strength. Examples of the resin include PET (polyethylene terephthalate), PE (polyethylene), PP (polypropylene), LDPE (low-density polyethylene), CPP (cast polypropylene), OPP (oriented polypropylene), PVDC (polyvinylidene chloride), KOP (PVDC-coated OPP), NY (nylon), ONY (oriented nylon), KONY (PVDC-coated ONY), EVOH (ethylene-vinyl alcohol copolymer), PVA (polyvinyl alcohol), and MXD (nylon-MXD6 (meta-xylylene adipamide)).

The first container has a shape that is attachable as the lid for the second container, and that makes it possible to spout the contents after the first container is attached as the lid for the second container. For example, the first container typically has a shape wherein the first container has as large an outer diameter of around 25 to 35 mm as the lid for a so-called plastic bottle and includes a storage portion that can be sealed and store 1 to 10 mL of the mineral-concentrated liquid composition and pressurized gas. A mechanism for spouting the mineral-concentrated liquid composition stored in the storage portion is attached to the first container. For example, the mechanism for spouting the mineral-concentrated liquid composition may be, but not limited to, a tube with a minute diameter that can be opened after the first container is attached as the lid for the second container. For example, the first container may be a container wherein, like an ordinary plastic bottle container and the lid therefor, a groove is formed on the lid attachment portion of the second container, a groove is also formed on the inside of the first container so as to mate with the groove, the first container is placed on the second container as the lid and then rotated along a guide using the grooves, the second container is sealed with the first container, and a mechanism for spouting the contents can then be opened. If the spouting mechanism is opened, the mineral-concentrated liquid composition is spouted from the first container into the second container by gas sealed in the first container at positive pressure. For example, lid-like first containers having such a mechanism are described in JP 2009-535269 A and JP 2014-520045 A.

The first container may be collected after use and refilled with the mineral-concentrated liquid composition and gas to be reusable, whereby the advantage of reducing waste can be obtained.

### <Second container>

The second container for the system for providing a beverage of the present invention is a container that can store 1 to 3 L of water and to which the first container can be attached as the lid.

If the mineral-containing drinking water is produced with the system of the present invention, the second container is filled with water in an amount that is in the range of 1 to 3 L, and enables beforehand to achieve the predetermined dilution rate of the mineral-concentrated liquid composition in the first container. For example, if the mineral-concentrated liquid composition to be used at a dilution rate of 100 times is stored in the first container, the volume of the mineral-concentrated liquid composition in the first container is 10 mL, and the volume of water to fill the second container is 1 L. For example, if the mineral-concentrated liquid composition to be used at a dilution rate of 1000 times is stored in the first container, the volume of the mineral-concentrated liquid composition in the first container is 1 to 3 mL, and the volume of water to fill the second container is 1 to 3 L according to the volume of the mineral-concentrated liquid composition.

Examples of the type of water to fill the second container include tap water, pure water, plain hot water, distilled water, desalted water, ion-exchanged water, RO water, deoxygenated water, alkaline ionized water, and deep seawater. Tap water, pure water, plain hot water, distilled water, desalted water, ion-exchanged water RO water, deoxygenated water, and the like, containing a small amount of minerals, are preferable from the viewpoint of the balance between minerals after the addition of the mineral-concentrated liquid composition. Among these, tap water, water passed through a water purifier, plain hot water, and the like, obtained conveniently at home, are preferably used. If these types of water, obtained conveniently even at homes, are used, and if the second container is washed and repeatedly used, only the first container storing the single-use mineral-concentrated liquid composition is newly necessary for producing drinking water once, and the advantage of producing a mineral-containing drinking water in a volume of 1 to 3 L easily at home can be obtained.

The material of the second container is not particularly limited. Examples include metal containers (cans), resin bottle containers, paper containers, pouch containers, and glass bottles. Among others, the second container is preferably a container made of resin from the viewpoint of cost and strength. A transparent or semitransparent container is preferable from the viewpoint of the ease of confirming the inside visually. Examples of the resin include PET (polyethylene terephthalate), PE (polyethylene), PP (polypropylene), LDPE (low-density polyethylene), CPP (cast polypropylene), OPP (oriented polypropylene), PVDC (polyvinylidene chloride), KOP (PVDC-coated OPP), NY (nylon), ONY (oriented nylon), KONY (PVDC-coated ONY), EVOH (ethylene-vinyl alcohol copolymer), PVA (polyvinyl alcohol), and MXD (nylon-MXD6 (meta-xylylene adipamide)) in the same way as those of the first container.

The shape of the second container only has to be a shape that can store water in a volume of 1 to 3 L and to which the first container can be attached as the lid. For example, a bottle container having a body and a mouth with a smaller diameter than that of the body is preferable since a lid can be easily attached to, and it is possible to easily lift the bottle container to pour water into a glass due to its shape. The shape of the second container is not, however, limited to this.

The second container is preferably a container that can be used repeatedly by washing. The repeated use of the second container makes it possible to obtain the advantage of reducing waste. For example, if a consumer who used to purchase plastic bottles having a capacity of around 500 mL to 2 L and containing mineral water, and to discard the empty plastic bottles after drinking, uses the system of the present invention and uses the second container repeatedly, waste of plastic bottles can be reduced.

If the second container is repeatedly used, in order to obtain the strength, the second container is preferably manufactured so as to have a slightly thick container wall. For example, in the case of using a container made of resin (for example, a bottle made of polyethylene terephthalate) and having a capacity 1 to 3 L (for example, 1.5 L) as the second container, the container preferably has a weight of 85 g or more.

In the case of the repeated use of the second container, the second container preferably has the at least inner surface of the body in an almost even and smooth shape with few grooves and unevenness to facilitate internal washing.

### <Methods for preparing mineral-containing drinking water>

The method for preparing mineral-containing drinking water using the system for providing a beverage of the present invention are as follows.
(1) The first container storing the above-mentioned single-use mineral-concentrated liquid composition having a volume of 1 to 10 mL and the pressurized gas is first prepared.
(2) The second container washed internally is then filled with water in a volume that can achieve the predetermined dilution rate of the mineral-concentrated liquid composition and ranges from 1 to 3 L.
(3) The first container is then attached as the lid for the second container.
(4) After the first container is attached as the lid for the second container, the mineral-concentrated liquid composition in the first container is spouted into the second container to obtain the mineral-containing drinking water in the second container.

Although the amount of mineral-concentrated liquid composition to be stored in the first container (1 to 10 mL) is very small as compared with the amount of the water to be stored in the second container (1 to 3 L), in the present invention, the pressurized gas stored with the mineral-concentrated liquid composition in the first container makes it possible to spout the composition in the first container into the second container, and a small volume of the mineral-concentrated liquid composition can therefore be mixed into a larger volume of water rapidly and diffused into the entire water. The operation of the "spouting" can give the users refreshingness and pleasure due to the injection of the liquid into water.

As described above, use of water such as tap water, water passed through a water purifier, or plain hot water that can be easily obtained at home as water to fill the second container is preferable since by the preparation method it is possible to easily obtain the mineral-containing drinking water at home.

In this case, the use of the concentrated extract liquid from the plant-derived activated carbon, especially the concentrated extract liquid from palm shell activated carbon, as the mineral-concentrated liquid composition makes it possible to obtain smooth mineral-containing drinking water with little odd taste and reduce a chlorine smell or the smell like chlorine derived from tap water, and is therefore preferable.

If the mineral-concentrated liquid composition further contains the finely pulverized material of the plant-derived activated carbon and L-ascorbic acid besides the concentrated extract liquid from the plant-derived activated carbon, the composition can further reduce a chlorine smell or the smell like chlorine derived from tap water, and is therefore preferable.

As described above, in the above-mentioned preparation method, if the second container is washed and used repeatedly, and if water such as tap water obtained simply at home is used as water to be stored in the second container, it is possible to produce mineral-containing drinking water in a volume of 1 to 3 L easily only by newly preparing the first container storing the mineral-concentrated liquid composition at home. Accordingly, the method of the present invention can substitute for the purchase of plastic bottles of mineral water in a volume of 1 to 3 L, and can contribute to a reduction in waste plastic bottles. Since the first container storing mineral-concentrated liquid composition is smaller than a container having a capacity of 1 to 3 L, the first container can be more space-saving while the first container is carried or stored in the case of purchasing only the first container newly than in the case of purchasing mineral water in plastic bottles having capacities of 1 to 3 L or purchasing and storing bottles of water for a water server having a capacity of 5 to 15 L. Discarding only the first container reduces waste as compared with discarding plastic bottles having a capacity of 1 to 3 L every time.

Furthermore, the first container can be reused by collecting the first container after use and refilling the mineral-concentrated liquid composition and gas therein. In this case, waste is further reduced.

The system and the method of the present invention can reduce effort required for the extraction and produce mineral-containing drinking water easily even at home or the like as compared with the conventional methods involving extracting mineral components from natural ore or charcoal. In the conventional methods, it was difficult due to variation in ingredients or conditions during the extraction to produce mineral-containing water with stable quality. Meanwhile, in the system of the present invention, it is possible to provide mineral-containing drinking water with stable quality by spouting a single-use mineral-concentrated liquid composition provided beforehand into water for achieving a predetermined dilution rate by pressurized gas.

In the conventional extraction method, the production of the mineral-containing water in a relatively large amount of 1 to 3 L at home or the like requires the provision of a large-capacity container for extraction and time. Meanwhile, in the system and the method of the present invention, the mineral-containing drinking water can be instantly produced in a volume of 1 to 3 L by convenient means for spouting the mineral-concentrated liquid composition from the lid.

### EXAMPLES

Hereinafter, the present invention will be described further in detail by showing Examples. The present invention is, however, not limited to the following Examples, and can be appropriately modified to be implemented.

### <ICP analysis of minerals (various metal ions)>

The ICP emission spectrophotometer: iCAP6500Duo (available from Thermo Fisher Scientific K.K.) was used. The ICP versatile mixed solution XSTC-622B was diluted, and four-point calibration curves were prepared by measuring the dilutions at 0 mg/L, 0.1 mg/L, 0.5 mg/L, and 1.0 mg/L. Samples were diluted with dilute nitric acid so that the concentrations were in the calibration curve ranges and subjected to ICP measurement.

### <IC analysis of chloride ions>

The ion chromatograph system: ICS-5000K (available from NIPPON DIONEX K.K.) was used. As the columns, a Dionex Ion Pac AG20 and a Dionex Ion Pac AS20 were used. The elution was performed at a flow rate of 0.25 mL/minute using aqueous potassium hydroxide solutions as the eluents at 5 mmol/L from 0 to 11 minutes, then at 13 mmol/L from 13 to 18 minutes, and then at 45 mmol/L for 20 to 30 minutes . An anion mixed standard solution 1 (containing seven ion species including chloride ions (Cl⁻) at 20 mg/L: available from FUJIFILM Wako Pure Chemical Corporation) was diluted, and a five-point calibration curve for chloride ions was prepared by measuring the dilutions at 0 mg/L, 0.1 mg/L, 0.2 mg/L, 0.4 mg/L, and 1.0 mg/L. The samples were diluted so that the concentrations were in the calibration curve range, and 25 µl of the samples were injected, followed by IC measurement.

### <Production Example 1 of mineral-concentrated liquid composition>

A 1-L Erlenmeyer flask was charged with 174 g of palm shell activated carbon ("Taiko (R) CW type" unwashed product/ available from Futamura Chemical Co., Ltd.) and 753 g of distilled water warmed to 30°C, and the mixture was stirred with a stirring bar at 100 rpm for 5 minutes while the mixture was warmed at 30°C. The obtained suspension was suction-filtered through a 500-mesh (25 µm) polyester filter, and the filtrate obtained thereby was centrifuged at 3000 rpm for 10 minutes. The supernatant after the centrifugation was suction-filtered through filter paper to obtain mineral extract liquid. The same procedure was performed further twice. The three obtained mineral extract liquids were mixed, and the mixture was concentrated by 62 times with an evaporator. The obtained concentrated liquid contained a potassium ion at a concentration of 58379 ppm, a chloride ion at a concentration of 15016 ppm, a calcium ion at a concentration of 15 ppm, a magnesium ion at a concentration of 20 ppm, and a sodium ion at a concentration of 7502 ppm.

### <Production Example 2 of mineral-concentrated liquid composition>

A 1-L Erlenmeyer flask was charged with 200 g of palm shell activated carbon ("Taiko (R) CW type" unwashed product/ available from Futamura Chemical Co., Ltd.) and 1500 g of distilled water warmed to 90°C, and the mixture was stirred with a stirring bar at 100 rpm for 15 minutes while the mixture was warmed at 90°C. The obtained suspension was suction-filtered through a 500-mesh (25 µm) polyester filter, and the filtrate obtained thereby was centrifuged at 3000 rpm for 10 minutes. The supernatant after the centrifugation was suction-filtered through filter paper to obtain mineral extract liquid. The obtained mineral extract liquid was concentrated by 14 times with an evaporator. The obtained concentrated liquid contained a potassium ion at a concentration of 11451 ppm, a chloride ion at a concentration of 2442 ppm, a calcium ion at a concentration of 2 ppm, a magnesium ion at a concentration of 1 ppm, and a sodium ion at a concentration of 1650 ppm.

### <Effect of reducing smell like chlorine and chlorine smell with mineral-concentrated liquid composition>

First, 10 mL of the concentrated liquid obtained in Production Example 2 of the above-mentioned mineral-concentrated liquid composition were added to 1.5 L of tap water containing a chloride ion at a concentration of 0.5 ppm. Finely pulverized material of bamboo charcoal and L-ascorbic acid were added in the amounts shown in the following Table 1. Ten trained panelists evaluated the degree of the smell like chlorine and a chlorine smell with respect of each level. The evaluations were evaluated on a scale of 1 to 5 with the smell like chlorine and the chlorine smell of the tap water (at a chloride concentration of 0.5 ppm) not containing the concentrated liquid evaluated as five points and those of clean water, not containing chlorine, evaluated as one point. The panelists confirmed the evaluation criteria beforehand. Table 1 shows the averages of scores given by the panelists. The results in Table 1 show that the addition of the mineral-concentrated liquid composition reduces the smell like chlorine and a chlorine smell derived from tap water. It is found that the addition of the finely pulverized material of the plant-derived activated carbon and L-ascorbic acid to the mineral-concentrated liquid composition further reduces the smell like chlorine and the chlorine smell derived from tap water.

**[Table 1]**

| Mineral-concentrated liquid composition of Production Example 2 (76 ppm) | Not added | Added | | | |
|---|---|---|---|---|---|
| Finely pulverized material of bamboo charcoal (mg/L) | 0 | | 2 | 3 | 4 |
| L-Ascorbic acid (mg/L) | 0 | | 30 | | |
| Evaluation result | 5.0 | 2.5 | 1.9 | 1.7 | 1.6 |

### <Use example of system and method of the present invention>

As a first container, provided was a member wherein the member was made of resin, and included a mechanism for spouting the contents and a storage portion, and the member was configured to be a lid for a second container when the member was placed on the mouth of the second container and rotated. The first container was further configured to open the mechanism for spouting the contents by rotating the first container after the attachment thereof as the lid for the second container, resulting in spouting the contents into the second container.

The storage portion of the first container was charged with 2 mL of the composition produced in the above-mentioned Production Example 1 of mineral-concentrated liquid composition, 3 to 4 mg of finely pulverized materials of bamboo charcoal pulverized to 6 µm or less, and 30 mg of L-ascorbic acid. Nitrogen gas was further added, and the storage portion was sealed with the inside of the storage portion maintained at positive pressure.

A transparent bottle-shaped container that was made of polyethylene terephthalate, and was able to store 1.5 L of water was provided as the second container. This second container was filled with 1.5 L of tap water.

The obtained first container sealed above was rotated on the mouth of the second container storing water to be attached as the lid for the second container. The first container was further rotated continuously to open the mechanism for spouting. The mineral-concentrated liquid composition consisting of the above-mentioned composition, the finely pulverized material of the bamboo charcoal, and L-ascorbic acid was spouted into the water in the second container to prepare mineral-containing drinking water.

The obtained mineral-containing drinking water had little odd taste, and was smooth and satisfactory. The chlorine smell and the smell like chlorine derived from tap water were significantly reduced.

## Claims

1. A system for providing mineral-containing drinking water, comprising:
a first container storing
1 to 10 mL of a single-use mineral-concentrated liquid composition to be used at a dilution rate of 100 to 1000 times and
pressurized gas,
and configured to be attachable as a lid for a second container; and
the second container for storing 1 to 3 L of water,
wherein the first container and the second container are configured to enable the mineral-concentrated liquid composition in the first container to be spouted into the second container after attachment of the first container as the lid for the second container.

2. The system according to claim 1, wherein
the second container stores water in an amount necessary for achieving the dilution rate of the mineral-concentrated liquid composition, and
the first container and the second container are configured to spout the mineral-concentrated liquid composition in the first container into the second container after the attachment of the first container as the lid for the second container to form mineral-containing drinking water in the second container.

3. The system according to claim 1 or 2, wherein the first container and the second container are made of resin.

4. The system according to any one of claims 1 to 3, wherein the second container is a reusable container.

5. The system according to any one of claims 1 to 4, wherein the second container is made of resin, and has a mass of 85 g or more.

6. The system according to any one of claims 1 to 5, wherein the mineral-concentrated liquid composition comprises concentrated extract liquid from plant-derived activated carbon .

7. The system according to any one of claims 1 to 6, wherein the mineral-concentrated liquid composition comprises concentrated extract liquid from palm shell activated carbon.

8. A method for preparing mineral-containing drinking water in a second container using a mineral-concentrated liquid composition stored in a first container, wherein
the first container stores 1 to 10 mL of the single-use mineral-concentrated liquid composition to be used at a dilution rate of 10 to 1000 times and pressurized gas, is configured to be attachable as a lid for the second container, and to enable the mineral-concentrated liquid composition in the first container to be spouted into the second container after attachment of the first container as the lid for the second container, and
the second container has a capacity of 1 to 3 L, and can store water in a volume ranging from 1 to 3 L and obtained by multiplying volume of the mineral-concentrated liquid composition by the dilution rate, the method comprising:
filling the second container with water in an amount necessary for achieving the dilution rate of the mineral-concentrated liquid composition; and
spouting the mineral-concentrated liquid composition in the first container into the second container filled with the water after attachment of the first container as the lid for the second container.

9. The method according to claim 8, wherein the mineral-concentrated liquid composition comprises concentrated extract liquid from palm shell activated carbon.

10. The method according to claim 8 or 9, further comprising washing the second container after consumption of the mineral-containing drinking water in the second container and then refilling the second container with water to use the second container.

11. The method according to any one of claims 8 to 10, further comprising collecting the first container for reuse after the mineral-concentrated liquid composition is spouted.
